# EUROPEAN PATENT SPECIFICATION

(11) **EP 2 711 497 B1**
(45) Date of publication and mention of the grant of the patent: **13.08.2014**
(21) Application number: 12185212.3
(22) Date of filing: 20.09.2012
(51) Int. Cl.: E21B 17/046, F16L 21/08, F16L 25/06

(54) **Modular shaft for machine tools**
Modularschaft für Maschinenwerkzeuge
Arbre modulaire pour machines-outils.

(43) Date of publication of application: 26.03.2014
(73) Proprietor: SIR MECCANICA S.p.A., 88100 Catanzaro (IT)
(72) Inventor: Siracusa, Rinaldo, 88100 Catanzaro (IT)
(74) Representative: Firmati, Leonardo

(56) References cited:
- DE-A1- 2 945 554
- US-A- 3 240 513
- US-A- 3 585 803
- US-A- 3 827 728
- US-A- 4 124 231

## Description

This invention relates to a modular shaft for machine tools. In particular, it relates to a rotary shaft which can be fitted on machine tools for the transmission of torques or as a precision sliding axis.

Modular shafts for machine tools are made up of tubular segments which are fitted together using various types of connections.

There are prior art modular shafts which are made from a plurality of segments, which are connected to each other using cylindrical connections. Such shafts have a first, male end with a cylindrical ending having a reduced cross-section, which can be inserted in a corresponding opposite end of an adjacent segment.

The two adjacent segments are locked in position by one or more screws which engage at the cylindrical connection to lock the two segment together and prevent them from coming away from each other.

Generally, the tubular segments of such modular shafts comprise a tongue or a pin located at one of the ends and which can be associated with a respective groove made on the end opposite the tongue, for transmitting the torque generated by the machine tool from a first tubular segment to the next segment.

Such modular shafts do not have precision alignment between the various tubular segments, therefore shafts were developed which have a tapered connection between a male portion and a female portion.

In such tapered connections, the inner surface of the female portion extends in a tapered fashion with a cross-section decreasing away from the end of the tubular segment to which it belongs, whilst the tubular portion with reduced cross-section of the male end extends in a tapered fashion with a cross-section increasing away from its end of the tubular segment. In a good tapered connection the length and taper angle of the connecting portions of the male end and the female end are practically the same, so as to maximise the (tapered) contact surface between one tubular segment and the next which is connected to it. Finally, screws, like those used in the cylindrical connections, lock the male end to prevent it from coming out of the female end.

Even shafts with a tapered connection have a tongue and groove system for transmitting torque.

Disadvantageously, in the prior art modular shafts, whether with a cylindrical connection or a tapered connection, the transfer of the torque from one tubular segment to the adjacent tubular segment is performed completely by the tongue and groove interaction, with obvious problems in terms of sizing if the torques to be transmitted are very high. Moreover, a very large tongue and groove system causes a high level of eccentricity of the rotating masses of the tubular segments with consequent strong vibrations that limit the lifetime of the shaft, the machining precision and may lead to breakages due to shaft component fatigue.

Another disadvantage of prior art modular shafts relates to locking of the male end of the connection using the screws. In fact, the screws lock the male end by applying a strong radial pressure on it and, therefore, by means of friction, prevent the male end from coming out of the female end. However, that configuration creates extremely strong local stresses on the pressure points of the screws, which result in permanent deformations of the male end, friction wear on the screws and, therefore, a limited working life of the tubular segment.

In some other applications, like the axial connection of flight auger, are used connectors having a threaded male part screwed and tightened to the threaded female part and locked one another by the use of a plurality of axial screws connecting to faced flanges of the two parts.

An example of such connection is known from document US3240513.

Such modular shafts undergo many assembly/disassembly operations and said prior art configurations have the obvious disadvantage of resulting in permanent deformations of the tubular segment which, therefore, after various cycles is unusable.

In this context, the technical purpose which forms the basis of this invention is to propose a modular shaft for machine tools which overcomes the above mentioned disadvantages of the prior art.

In particular, this invention has for an aim to provide a modular shaft for machine tools which guarantees a precise and reliable connection between the components.

Another aim of this invention is to provide a modular shaft for machine tools which is resistant to wear and to bending and twisting stresses.

A further aim of this invention is to provide a modular shaft for machine tools which can transmit significant torques while minimising eccentricity.

The technical purpose indicated and the aims specified are substantially achieved by a modular shaft for machine tools comprising the technical features described in one or more of the appended claims.

Further features and advantages of this invention are more apparent in the detailed description below, with reference to a preferred, non-limiting, embodiment of a modular shaft for machine tools as illustrated in the accompanying drawings, in which:
- Figure 1 is a perspective view of two components of the shaft according to this invention;
- Figure 2 is a perspective view of the components of Figure 1 in an operating configuration;
- Figure 3 is a longitudinal section of the shaft in the configuration of Figure 2.

With reference to the accompanying drawings, the numeral 1 denotes in its entirety a modular shaft for machine tools.

The modular shaft 1 comprises at least two tubular segments 2, 3, which can be connected to each other along the same axis "X" of the shaft 1 itself.

In the preferred embodiment, the tubular segments 2, 3 have a cylindrical cross-section relative to the axis "X". In particular, the axis "X" of the shaft substantially coincides with the axis of symmetry of the tubular segments 2, 3 themselves. At least the first tubular segment 2 comprises, at one end, a first connecting portion 4 forming a tapered shank 6. Similarly, the second segment 3 comprises, at one end, a second connecting portion 5 forming a tapered receiving surface 7 set up for receiving the tapered shank 6 of the first segment 2.

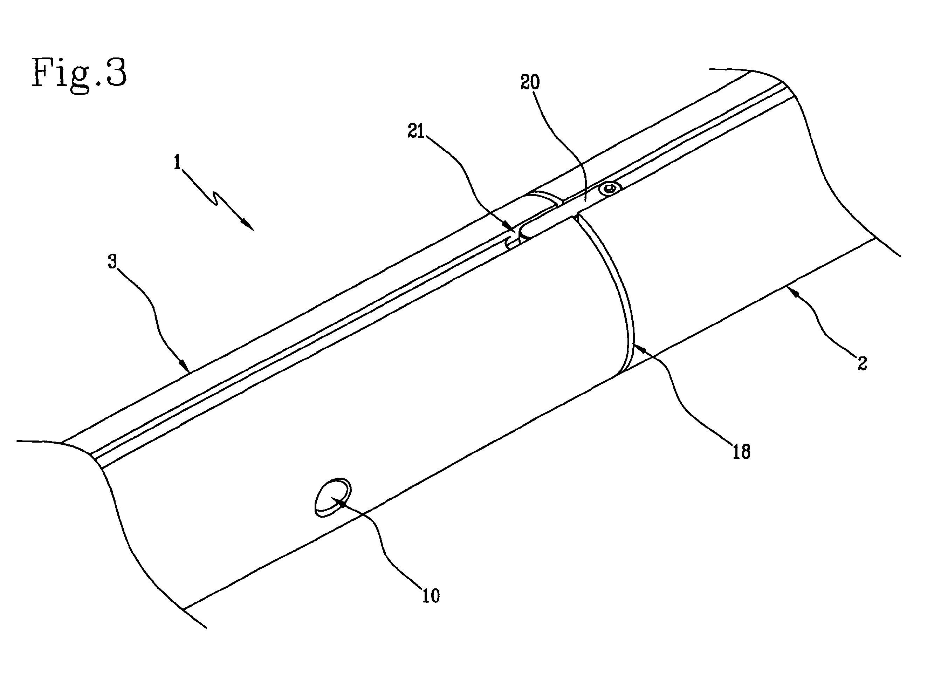

As shown in Figure 3, the first connecting portion 4 and the second connecting portion 5 form a tapered connection between the two tubular segments 2, 3. In particular, the interaction between the shank 6 and the tapered surface 7 allows centring of the first tubular segment 2 relative to the second tubular segment 3.

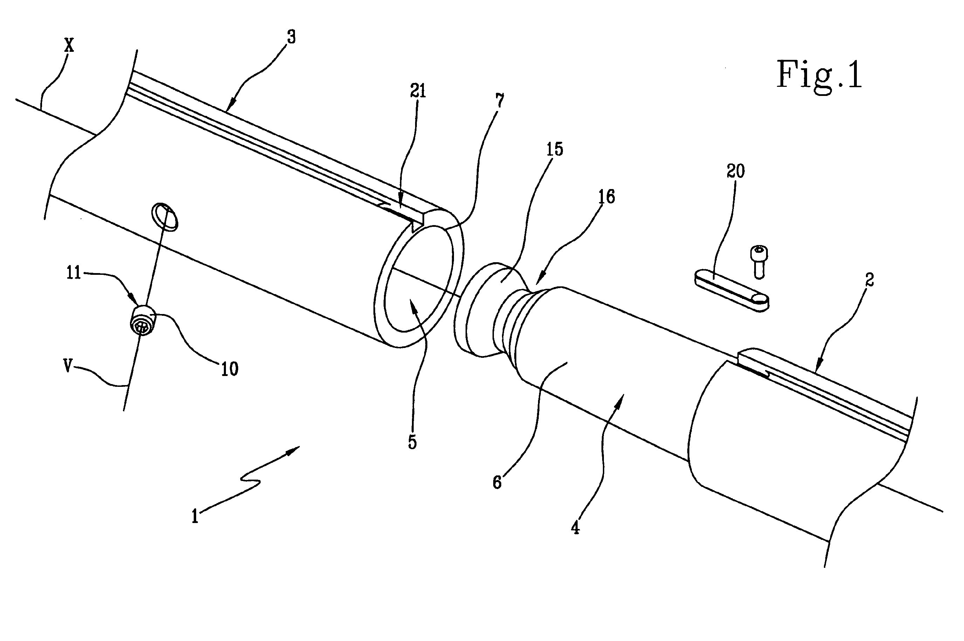

As shown in Figure 1, the shank 6 has a substantially frustoconical shape whose tapered extension reveals its cross-section increasing away from the end of the tubular segment 2.

Similarly, the tapered surface 7 also has a substantially frustoconical shape whose tapered extension reveals its cross-section decreasing away from the end of the tubular segment 3 to which it belongs, thereby forming a guide for insertion of the shank 6.

The angle of the frustoconical extensions of the shank 6 and the tapered surface 7, relative to the axis "X", form a taper angle 14 of the connection. The taper angle 14 is preferably between 2° and 8°, and even more preferably equal to approximately 2.5°.

The modular shaft 1 also comprises at least one locking screw 10 located at the connecting portions 4, 5 of the tubular segments 2, 3 and acting on the connecting portions 4, 5 to stably lock the segments 2, 3 together.

More particularly, the locking screw 10 is positioned and operates along a screwing axis "V" incident on the axis "X" of the shaft 1 and with said axis "X" of the shaft forming a locking screw 10 fixing angle 12.

Advantageously, the fixing angle 12 is other than 90° and, in particular, is an acute angle.

In particular, the fixing angle 12 is between 30° and 70°.

Preferably the fixing angle 12 is between 55° and 65°.

Even more preferably, the fixing angle 12 is equal to approximately 60°.

Said fixing angle 12, which as indicated above is an acute angle, is the angle formed between the shaft 1 axis "X" and the half-line on which the locking screw 10 lies, facing towards the end of the second tubular segment 3, that is to say, facing towards the inlet of the second connecting portion 5.

The first connecting portion 4 of the first tubular segment 2 comprises at least one fixing surface 15 set up to receive the thrust action applied by the locking screw 10, as shown in Figure 3. Advantageously, the fixing surface 15 is transversal to the screwing axis "V" of the locking screw 10.

In a preferred embodiment, the fixing surface 15 is perpendicular to the screwing axis "V" of the locking screw 10.

That geometrical arrangement of the fixing surface 15 allows maximum use to be made of the locking action of the screw 10 and, at the same time, minimises deformations of the shank 6 subjected to the locking action of the screw 10.

Even more particularly, the locking screw 10 comprises a substantially flat front contact surface 11 which can engage against the fixing surface 15 of the first connecting portion 4 of the first segment 2.

Said interaction between the flat locking screw 10 and the fixing surface 15 transversal to the screwing axis "V" directly influences the length of the operating life of the shank 6 and therefore of the entire tubular segment 2. In fact, the flat front contact surface 11 allows uniform loading of the clamping force of the locking screw 10 on a greater surface area. The result is reduced elastic and/or permanent deformation of the fixing surface 15 of the shank 6 and greater repeatability of connection assembly/disassembly.

Looking at the construction detail of the tubular segment 2, at the first connecting portion 4, it comprises a peripheral groove 16 forming the fixing surface 15 for engaging with the locking screw 10. More particularly the peripheral groove 16 extends along an entire angular extension about the axis "X" of the shaft 1.

In a preferred embodiment, the peripheral groove 16 is axially symmetric about the axis "X".

In other words, in the preferred embodiment, the groove 16 forms an axially symmetric undercut which extends along the entire circumference of the cross-section of the shank 6.

In other words, the undercut formed by the groove 16 allows the shank 6 to receive the locking screw 10 which in that way can engage on the fixing surface 15, therefore allowing the tapered shank 6 to be kept connected inside the tapered surface 7 of the second connecting portion 5.

The modular shaft 1 may also comprise a connecting tongue 20 interposed between the first connecting portion 4 and the second connecting portion 5 for defining correct reciprocal angular positioning of the tubular segments 2, 3 to be assembled.

In particular, the connecting tongue 20 engages on a related cavity 21 specially made for the angular positioning of the two tubular segments 2, 3 to be assembled.

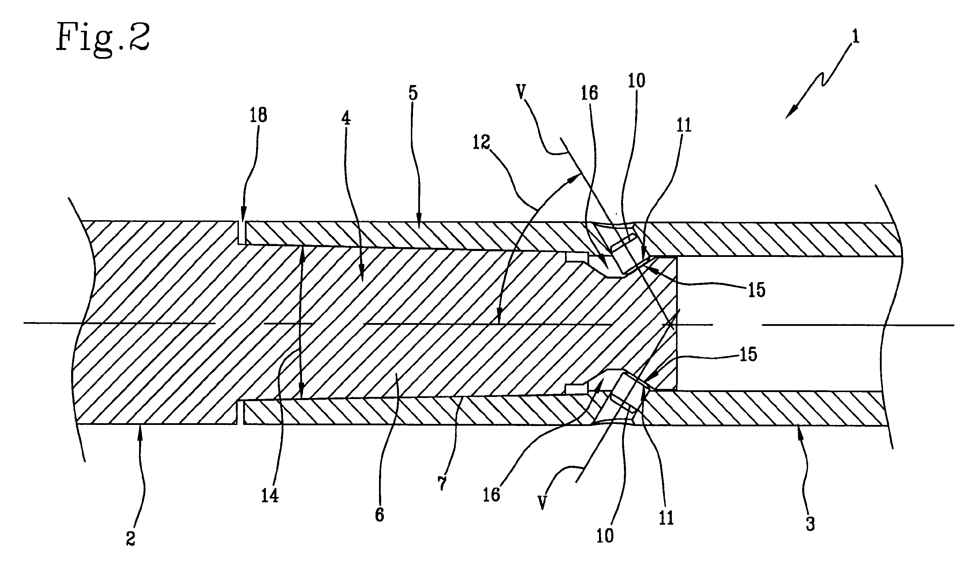

In the preferred embodiment, the tongue 20 is made at the first connecting portion 4 of the tubular segment 2 whilst the cavity 21 is made on the second connecting portion 5 of the tubular segment 3, as shown in Figure 2.

As shown in Figures 2 and 3, once the two tubular segments 2, 3 have been connected, an external channel 18 can be seen. In fact, the first 4 and second 5 connecting portions are shaped in such a way as to form, between the two tubular segments 2, 3 drawn near each other, the above-mentioned external channel 18 which is designed to allow a further forced movement of the two tubular segments 2, 3 towards each other when the two connecting portions 4, 5 are clamped together using the locking screws 10.

In particular, for the sake of clarity, the term "drawn near" means that the first connecting portion 4 of the tubular segment 2 is inserted until it makes contact in the second connecting portion 5 of the tubular segment 3, before the traction applied by the locking screws 10. Therefore, during tightening of the locking screws 10, the existence of the channel 18 allows a further longitudinal sliding motion of the shank 6 in the second connecting portion 5, caused by the force fitting from tightening of the screw 10 and/or by local elastic deformations of the material.

Finally, in the preferred embodiment, each of the tubular segments 2, 3 comprises, at the first end, the first connecting portion 4 forming the tapered shank 6 and, at the second end opposite to the first end, the second connecting portion 5 forming the tapered receiving surface 7.

In other words, each tubular segment 2, 3 comprises both the first connecting portion 4 and the second connecting portion 5, in such a way that it does not matter in which order the first tubular segment 2 and the second tubular segment 3 are assembled, since except for their nominal length they are equivalent to one another as regards possible connection to a further tubular segment. Very briefly, it may be said that the modular shaft made using the individual tubular segments 2, 3 is, in this case, a modular structure which may comprise two or more tubular segments depending on the requirements for use.

According to the preferred embodiment of the invention, the shaft 1 comprises a plurality of locking screws 10 spaced at angular intervals about the axis "X".

In a preferred embodiment, the locking screws are spaced at equal angular intervals about the axis "X". In particular, according to one embodiment, the shaft 1 comprises three locking screws 10 which are equidistant from each other, being separated by an angle of approximately 120°. That arrangement of the screws 10 has proved optimum relative to the seal of the connection in operation and as regards the low level of residual tensions generated by the connection of the two tubular segments 2, 3. Moreover, said arrangement of the locking screws 10 results in optimum balancing of the masses, giving extremely low eccentricity and, therefore, minimising mechanical vibrations.

The invention achieves the preset aims. The modular shaft according to this invention guarantees a connection between the segments which is precise and reliable thanks to the particular geometry of the locking screws and the shank. The centring between the various tubular segments of which the shaft consists is guaranteed by the tapered shape of the contact surfaces and by the traction applied by the locking screws. Moreover, the particular shape of the screws and of the surfaces on which they act allow a drastic reduction in residual tensions caused by assembly, thus guaranteeing a long life for the segments even after many assembly and disassembly cycles. The structural and functional strength of the tapered connection made according to this invention also guarantees considerable resistance to wear and to the bending and twisting stresses to which the shaft is subjected.

In this description the measurements of the angles are expressed in sexagesimal degrees.

## Claims

1. A modular shaft for machine tools comprising:
- at least two tubular segments (2, 3), which can be connected to each other along the same axis (X) of the shaft (1), where at least a first (2) of the segments (2, 3) comprises at one end a first connecting portion (4) forming a tapered shank (6) whilst a second (3) of the segments (2, 3) comprises at one end a second connecting portion (5) forming a tapered receiving surface (7) set up for receiving the tapered shank (6);
- at least one locking screw (10) located at the connecting portions (4, 5) and acting on the connecting portions (4, 5) to stably lock the segments (2, 3) together; **characterised in that** the at least one locking screw (10) is positioned and operates along a screwing axis (V) incident on the axis (X) of the shaft (1) and with said axis (X) of the shaft (1) forming an acute fixing angle (12) between **30°** and **70°,** wherein the first connecting portion (4) of the first segment (2) comprises at least one fixing surface (15) set up to receive a thrust action applied by the at least one screw (10), said fixing surface (15) being transversal to the screwing axis (V) of the locking screw (10), the latter comprising a substantially flat front contact surface (11) which can engage against the fixing surface (15) of the first connecting portion (4) of the first segment (2).

2. The modular shaft according to claim 1, wherein the fixing angle (12) is between 55° and 65° and preferably equal to approximately 60°.

3. The modular shaft according to claim **1** or **2,** wherein the first segment (2) comprises, at the first connecting portion (4), a peripheral groove (16) forming said at least one fixing surface (15) for engaging with the at least one locking screw (10).

4. The modular shaft according to claim **3,** wherein the peripheral groove (16) extends along an entire angular extension about the axis (X) of the shaft (1).

5. The modular shaft according to claim **3,** wherein the peripheral groove (16) is axially symmetric about the axis (X) of the shaft (1).

6. The modular shaft according to any of the foregoing claims, comprising a plurality of said locking screws (10) spaced at angular intervals about the axis (X) of the shaft (1).

7. The modular shaft according to any of the foregoing claims, wherein each of the tubular segments (2, 3) comprises, at a first end, a first connecting portion (4) forming the tapered shank (6) and, at a second end opposite the first, a second connecting portion (5) forming the tapered receiving surface (7).

8. The modular shaft according to any of the foregoing claims, also comprising a connecting tongue (20) interposed between the first connecting portion (4) and the second connecting portion (5) for defining correct reciprocal angular positioning of the tubular segments (2, 3) to be assembled.

9. The modular shaft according to any of the foregoing claims, wherein the first connecting portion (4) and the second connecting portion (5) are shaped in such a way as to form, between said at least two tubular segments (2, 3) drawn near each other, an external channel (18) designed to allow a further forced movement of the two tubular segments (2, 3) towards each other when the two connecting portions (4, 5) are clamped together using the at least one locking screw (10).

## Patentansprüche

1. Modularschaft für Maschinenwerkzeuge, umfassend:
- mindestens zwei Rohrsegmente (2, 3), die miteinander entlang derselben Achse (X) des Schafts (1) verbunden werden können, wobei mindestens ein erstes (2) der Segmente (2, 3) an einem Ende einen ersten Verbindungsabschnitt (4), bildend einen verjüngten Kolben (6), umfasst, während ein zweites (3) der Segmente (2, 3) an einem Ende einen zweiten Verbindungsabschnitt (5), bildend eine verjüngte Aufnahmeoberfläche (7), umfasst, die zur Aufnahme des verjüngten Kolbens (6) eingerichtet ist;
- mindestens eine Sperrschraube (10), befindlich an den Verbindungsabschnitten (4, 5) und wirkend auf die Verbindungsabschnitte (4, 5), um die Segmente (2, 3) dauerhaft zusammenzusperren; **dadurch gekennzeichnet, dass** die mindestens eine Sperrschraube (10) entlang einer Schraubenachse (V) positioniert ist und arbeitet, einfallend auf die Achse (X) des Schafts (1) und mit dieser Achse (X) des Schafts (1) bildend einen spitzen Befestigungswinkel (12) zwischen 30° und 70°, wobei der erste Verbindungsabschnitt (4) des ersten Segments (2) mindestens eine Befestigungsoberfläche (15) umfasst, die eingerichtet ist, um eine von der mindestens einen Schraube (10) ausgeübte Schubwirkung aufzunehmen, wobei die Befestigungsoberfläche (15) quer zur Schraubenachse (V) der Sperrschraube (10) angeordnet ist und Letztere eine im Wesentlichen flache frontseitige Kontaktoberfläche (11) aufweist, die gegen die Befestigungsoberfläche (15) des ersten Verbindungsabschnitts (4) des ersten Segments (2) in Eingriff gelangen kann.

2. Modularschaft nach Anspruch 1, wobei der Befestigungswinkel (12) zwischen 55° und 65° beträgt und vorzugsweise ungefähr 60° ist.

3. Modularschaft nach Anspruch 1 oder 2, wobei das erste Segment (2) am ersten Verbindungsabschnitt (4) eine Umfangsrille (16) umfasst, bildend die mindestens eine Befestigungsoberfläche (15) für den Eingriff mit der mindestens einen Sperrschraube (10).

4. Modularschaft nach Anspruch 3, wobei sich die Umfangsrille (16) entlang einer ganzen Winkelausdehnung um die Achse (X) des Schafts (1) erstreckt.

5. Modularschaft nach Anspruch 3, wobei die Umfangsrille (16) axial symmetrisch um die Achse (X) des Schafts (1) angeordnet ist.

6. Modularschaft nach einem der vorhergehenden Ansprüche, umfassend eine Vielzahl der genannten Sperrschrauben (10), beabstandet in Winkelabständen um die Achse (X) des Schafts (1).

7. Modularschaft nach einem der vorhergehenden Ansprüche, wobei jedes der Rohrsegmente (2, 3) an einem ersten Ende einen ersten Verbindungsabschnitt (4), bildend den verjüngten Kolben (6), umfasst, und an einem zweiten Ende, das entgegengesetzt zum ersten angeordnet ist, einen zweiten Verbindungsabschnitt (5), bildend die verjüngte Aufnahmeoberfläche (7), umfasst.

8. Modularschaft nach einem der vorhergehenden Ansprüche, zudem umfassend eine Verbindungszunge (20), die zwischen dem ersten Verbindungsabschnitt (4) und dem zweiten Verbindungsabschnitt (5) eingesetzt ist, um eine korrekte gegenseitige Winkelpositionierung der zusammenzufügenden Rohrsegmente (2, 3) zu definieren.

9. Modularschaft nach einem der vorhergehenden Ansprüche, wobei der erste Verbindungsabschnitt (4) und der zweite Verbindungsabschnitt (5) so ausgebildet sind, dass sie zwischen den mindestens zwei Rohrsegmenten (2, 3), die nah aneinander gezogen sind, einen externen Kanal (18) bilden, der ausgestaltet ist, um eine weitere forcierte Bewegung der zwei Rohrsegmente (2, 3) zueinander hinführend zu erlauben, wenn die zwei Verbindungsabschnitte (4, 5) unter Nutzung der mindestens einen Sperrschraube (10) zusammen festgespannt werden.

## Revendications

1. Arbre modulaire pour machines-outils comprenant :
- au moins deux segments tubulaires (2, 3) pouvant être reliés réciproquement le long du même axe (X) de l'arbre (1), où au moins un premier (2) des segments (2, 3) comprend à une extrémité une première partie de liaison (4) formant une tige conique (6) pendant qu'un second (3) des segments (2, 3) comprend à une extrémité une seconde partie de liaison (5) formant une surface de réception conique (7) prévue pour recevoir la tige conique (6) ;
- au moins une vis de blocage (10) située au niveau des parties de liaison (4, 5) et agissant sur les parties de liaison (4, 5) pour bloquer solidement les segments (2, 3) ensemble ; **caractérisé en ce que** l'au moins une vis de blocage (10) est positionnée et agit le long d'un axe de vissage (V) rencontrant l'axe (X) de l'arbre (1) et formant, avec ledit axe (X) de l'arbre (1), un angle aigu de fixation (12) compris entre 30 et 70°, dans lequel la première partie de liaison (4) du premier segment (2) comprend au moins une surface de fixation (15) prévue pour recevoir une action de poussée appliquée par l'au moins une vis (10), ladite surface de fixation (15) étant transversale à l'axe de vissage (V) de la vis de blocage (10), cette dernière comprenant une surface de contact antérieure substantiellement plate (11) pouvant se mettre en prise contre la surface de fixation (15) de la première partie de liaison (4) du premier segment (2).

2. Arbre modulaire selon la revendication 1, dans lequel l'angle de fixation (12) est compris entre 55 et 65° et de préférence égal à environ 60°.

3. Arbre modulaire selon les revendications 1 ou 2, dans lequel le premier segment (2) comprend, au niveau de la première partie de liaison (4), une rainure périphérique (16) formant ladite au moins une surface de fixation (15) pour se mettre en prise avec l'au moins une vis de blocage (10).

4. Arbre modulaire selon la revendication 3, dans lequel la rainure périphérique (16) se développe le long d'un développement angulaire entier autour de l'axe (X) de l'arbre (1).

5. Arbre modulaire selon la revendication 3, dans lequel la rainure périphérique (16) est axialement symétrique autour de l'axe (X) de l'arbre (1).

6. Arbre modulaire selon l'une quelconque des revendications précédentes, comprenant une pluralité desdites vis de blocage (10) espacées à des intervalles angulaires autour de l'axe (X) de l'arbre (1).

7. Arbre modulaire selon l'une quelconque des revendications précédentes, dans lequel chacun des segments tubulaires (2, 3) comprend, à une première extrémité, une première partie de liaison (4) formant la tige conique (6) et, à une seconde extrémité opposée à la première, une seconde partie de liaison (5) formant la surface de réception conique (7).

8. Arbre modulaire selon l'une quelconque des revendications précédentes, comprenant aussi une languette de liaison (20) interposée entre la première partie de liaison (4) et la seconde partie de liaison (5) pour définir un bon positionnement angulaire réciproque des segments tubulaires (2, 3) à assembler.

9. Arbre modulaire selon l'une quelconque des revendications précédentes, dans lequel la première partie de liaison (4) et la seconde partie de liaison (5) ont une forme telle à former, entre lesdits au moins deux segments tubulaires (2, 3) rapprochés l'un de l'autre, un canal externe (18) conçu pour permettre un déplacement forcé supplémentaire des deux segments tubulaires (2, 3) l'un vers l'autre lorsque les deux parties de liaison (4, 5) sont serrées ensemble en utilisant l'au moins une vis de blocage (10).
